# EUROPÄISCHE PATENTSCHRIFT

(11) **EP 2 382 404 B1**
(45) Veröffentlichungstag und Bekanntmachung des Hinweises auf die Patenterteilung: **11.06.2014**
(21) Anmeldenummer: 09798886.9
(22) Anmeldetag: 16.12.2009
(51) Int. Cl.: F16H 61/16, F16H 61/28, F16H 61/12, F16H 61/688

(54) **STEUERUNGSEINRICHTUNG FÜR EIN AUTOMATISIERTES ZAHNRÄDERWECHSELGETRIEBE**
CONTROL DEVICE FOR AN AUTOMATIC GEAR SHIFTING TRANSMISSION
DISPOSITIF DE CONTROLE POUR UNE TRANSMISSION AUTOMATIQUE AVEC CHANGEMENT PAR ENGRENAGES

(30) Priorität: 23.01.2009 DE 102009005755
(43) Veröffentlichungstag der Anmeldung: 02.11.2011
(73) Patentinhaber: Daimler AG, 70327 Stuttgart (DE)
(72) Erfinder: BRANDENBURG, Markus, 73730 Esslingen (DE)
(74) Vertreter: JENSEN & SON
(86) Internationale Anmeldenummer: PCT/EP2009/009043
(87) Internationale Veröffentlichungsnummer: WO 2010/083864

(56) Entgegenhaltungen:
- EP-A2- 1 420 185
- EP-A2- 1 881 239
- DE-A1- 10 125 172
- DE-A1- 10 205 619
- JP-A- 3 163 265
- JP-A- 60 220 246

## Beschreibung

Die Erfindung betrifft eine Steuerungseinrichtung für ein automatisiertes Zahnräderwechselgetriebe insbesondere ein Doppelkupplungsgetriebe mit den Merkmalen des Oberbegriffs des Anspruchs 1.

Aus der EP 1 635 091 A1 ist eine hydraulische Steuerungseinrichtung für ein automatisiertes Zahnräderwechselgetriebe in Form eines Doppelkupplungsgetriebes mit zwei Teilgetrieben für ein Kraftfahrzeug bekannt. Die verschiedenen Gänge des Doppelkupplungsgetriebes können mittels Schalteinrichtungen in Form von doppelseitig wirkenden Schaltzylindem eines Gangbetätigungssystem ein- und ausgelegt werden. Zum Ein- und Auslegen eines Gangs kann ein Zylinder des doppelseitig wirkenden Schaltzylinders in eine erste und in eine zweite Richtung bewegt werden. Der ein- oder auszulegende Gang wird mittels einer Gruppenwahl, einer Aktuatorauswahl und einer Aktuatorkammerauswahl bestimmt.

Aus der EP 1 420 185 A2 ist eine hydraulische Steuerungseinrichtung für ein Doppelkupplungsgetriebe zwei Teilgetrieben für ein Kraftfahrzeug bekannt. Dieses Dokument offenbart den Oberbegriff des Anspruchs 1. Die verschiedenen Gänge des Doppelkupplungsgetriebes können mittels Schalteinrichtungen in Form von doppelseitig wirkenden Schaltzylindern eines Gangbetätigungssystem ein- und ausgelegt werden. Mittels eines Wegeventils kann die Betätigungsrichtung eingestellt werden. Zur Auswahl einer von zwei Schalteinrichtungen eines Teilgetriebes ist ein einziger Gangschieber vorgesehen.

Demgegenüber ist es die Aufgabe der Erfindung, eine Steuerungseinrichtung für ein automatisiertes Zahnräderwechselgetriebe vorzuschlagen, welche eine Vielzahl von Funktionalitäten bei einer möglichst geringen Anzahl an Schiebern und ansteuerbaren Ventilen ermöglicht. Erfindungsgemäß wird die Aufgabe durch eine Steuerungseinrichtung mit den Merkmalen des Anspruchs 1 gelöst.

Ein erster Gangschieber, welcher einer ersten Schalteinrichtung eines ersten Teilgetriebes zugeordnet ist und mittels welchem ein Betätigungsdruck auf die erste Schalteinrichtung aufgebracht werden kann, weist für die erste und zweite Bewegungsrichtung des Kolbens der Schalteinrichtung einen ersten und einen zweiten Versorgungseingang auf. Mittels des ersten Gangschiebers kann eine Verbindung der Versorgungseingänge mit der Schalteinrichtung hergestellt oder unterbrochen werden. Ein Versorgungsdruckschieber, mittels welchem ein Versorgungsdruck auf den Gangschieber leitbar ist, weist einen ersten und einen zweiten Versorgungsausgang auf, welche jeweils mit dem ersten und zweiten Versorgungseingang des Gangschiebers verbunden sind. Der Versorgungsdruckschieber ist so ausgeführt, dass er einen Versorgungsdruck wahlweise auf einen der beiden Versorgungsausgänge leiten kann. Es ist nicht möglich, dass gleichzeitig an beiden Versorgungsausgängen ein Versorgungsdruck anliegt. Damit kann mittels des Versorgungsdruckschiebers die erste oder die zweite Bewegungsrichtung der Kolben ausgewählt werden und mittels des ersten Gangschiebers die erste Schalteinrichtung ausgewählt werden, deren Zylinder sich dann in die ausgewählte Richtung bewegen bzw. gedrückt wird.

Die erfindungsgemäße Steuerungseinrichtung ermöglicht es außerdem, dass die Gang-Steuerdrücke auch weitere Funktionen erfüllen, beispielsweise können mittels der Steuerdrücke das Verhalten eines Schmier-Kühlsystems beeinflusst werden.

Das Gangbetätigungssystem weist insbesondere eine zweite Schalteinrichtung des ersten Teilgetriebes und einen zugehörigen zweiten Gangschieber auf, wobei der zweite Gangschieber ebenfalls über zwei Versorgungseingänge verfügt, welche mit den Versorgungsausgängen des Versorgungsschiebers verbunden sind. Die Funktionsweise des zweiten Gangschiebers ist dabei identisch wie die des ersten Gangschiebers.

Das Zahnräderwechselgetriebe ist insbesondere als ein Doppelkupplungsgetriebe mit einem ersten und einem zweiten Teilgetriebe ausgeführt. Das Gangbetätigungssystem weist dazu eine dritte und vierte fluidbetätigte Schalteinrichtung und einen dritten und vierten Gangschieber zur Betätigung des zweiten Teilgetriebes auf. Der dritte und der vierte Gangschieber verfügen jeweils über zwei Versorgungseingänge, welche ebenfalls mit den Versorgungsausgängen des Versorgungsschiebers verbunden sind. Die Funktionsweise des dritten und vierten Gangschiebers ist dabei identisch wie die des ersten und zweiten Gangschiebers.

Damit kann mittels des Versorgungsdruckschiebers die erste oder die zweite Bewegungsrichtung der Kolben und mittels der Gangschieber eine oder zwei der Schalteinrichtungen ausgewählt werden.

Bei einem Zahnräderwechselgetriebe dürfen nicht zwei Gänge eines Teilgetriebes gleichzeitig eingelegt werden. Dies würde zu einem Blockieren des Getriebes und damit zu unkontrollierbaren Fahrzuständen des Kraftfahrzeugs und zu Beschädigungen des Getriebes führen. Aus diesem Grund weist die Steuerungseinrichtung eine Verriegelungsvorrichtung auf, welche ein gleichzeitiges Auswählen von zwei Schalteinrichtungen eines Teilgetriebes verhindert. Ist das Zahnräderwechselgetriebe als ein Doppelkupplungsgetriebe ausgeführt, so ist ein gleichzeitiges Auswählen von zwei Schalteinrichtungen unterschiedlicher Teilgetriebe möglich.

Die Einstellung der Gangschieber erfolgt insbesondere jeweils mittels Gang-Steuerdrücken, die von ansteuerbaren Ventilen, insbesondere Magnetventilen eingestellt werden. Die Magnetventile können als Schalt- oder Regelmagnetventile ausgeführt sein.

Die Steuerungseinrichtung ist insbesondere als eine hydraulische Steuerungseinrichtung ausgeführt, so dass insbesondere Öl als Betätigungsfluid eingesetzt wird. Es ist aber ebenso möglich, dass die Steuerungseinrichtung als eine pneumatische Steuerungseinrichtung mit Luft als Betätigungsfluid ausgeführt ist.

In Ausgestaltung der Erfindung wird der Versorgungsdruckschieber mit einem Arbeitsdruck versorgt. Das Gangbetätigungssystem weist ein dem Versorgungsdruckschieber zugeordnetes ansteuerbares Versorgungs-Ventil insbesondere in Form eines Regelmagnetventils auf, mittels welchem ein Versorgungs-Steuerdruck am Versorgungsdruckschieber einstellbar ist. Mittels dieses Versorgungs-Steuerdrucks kann damit in einem der Versorgungsausgänge ein vom Arbeitsdruck abgeleiteter Versorgungsdruck eingestellt werden. Damit kann mit dem Versorgungsdruckschieber nicht nur eine Bewegungsrichtung der Zylinder ausgewählt werden, sondern auch die Höhe des Betätigungsdrucks eingestellt werden. Damit kann der Ablauf einer Schaltung sehr genau bestimmt werden. Zur Auswahl der Schalteinrichtungen sind dann Schaltventile ausreichend. Beim Einsatz von Regelmagnetventilen zur Einstellung der Gang-Steuerdrücke kann eine Durchflussmenge in die Zylinder eingestellt werden und so zusätzlich eine Geschwindigkeit der Zylinder bei einer Schaltung beeinflusst werden.

In Ausgestaltung der Erfindung weist das Gangbetätigungssystem neben dem ersten einen zweiten Gangschieber auf, welcher einer zweiten Schalteinrichtung des ersten Teilgetriebes zugeordnet sind. Mittels der Gangschieber kann ein Betätigungsdruck auf die jeweils zugeordnete Schalteinrichtung aufgebracht werden. Dazu muss der zugehörige Gangschieber mittels eines Gang-Steuerdrucks in eine entsprechende Stellung gebracht werden und so eine Schalteinrichtung ausgewählt werden. Mittels eines ersten und eines zweiten ansteuerbaren Gang-Ventils insbesondere in Form von Magnetventilen, welche jeweils dem ersten und zweiten Gangschieber zugeordnet sind, kann ein erster bzw. ein zweiter Gang-Steuerdruck am ersten bzw. zweiten Gangschieber eingestellt werden. Der zweite Gang-Steuerdruck des zweiten Gangschiebers wirkt dabei am ersten Gangschieber dem ersten Gang-Steuerdruck entgegen, womit der erste Gangschieber durch den zweiten Steuerdruck verriegelbar ist.

Damit ist gewährleistet, dass sobald die zweite Schalteinrichtung mittels einer entsprechenden Einstellung des zweiten Gang-Steuerdrucks ausgewählt ist, die erste Schalteinrichtung nicht mehr ausgewählt werden kann. So wird auf einfache Weise verhindert, dass nach Auswahl der zweiten Schalteinrichtung anschließend die erste Schalteinrichtung auch noch ausgewählt wird und so gleichzeitig zwei Gänge des ersten Teilgetriebes eingelegt werden. Das Gangbetätigungssystem ist insbesondere so ausgeführt, dass auf entsprechende Weise der zweite Gangschieber durch den ersten Steuerdruck verriegelbar ist. In dem Fall, dass das Zahnräderwechselgetriebe als ein Doppelkupplungsgetriebe ausgeführt ist, weisen die Schalteinrichtungen eines dann vorhandenen zweiten Teilgetriebes entsprechende Verriegelungen auf.

Damit wird auf einfache Weise eine sichere Verriegelung der Gänge eines Teilgetriebes erreicht. Außerdem können mittels der Gang-Steuerdrücke auch weitere Funktionen innerhalb der Steuerungseinrichtung realisiert werden. Beispielsweise kann nachdem die zweite Schalteinrichtung mittels des zweiten Gang-Steuerdrucks ausgewählt wurde, der erste Gang-Steuerdruck erhöht werden, ohne dass damit zusätzlich zur zweiten Schalteinrichtung auch noch die erste Schalteinrichtung ausgewählt werden würde. Damit kann in diesem Zustand mittels des ersten Gang-Steuerdrucks beispielsweise das Verhalten eines Schmier-Kühlsystems beeinflusst werden.

Das Gangbetätigungssystem ist insbesondere so ausgeführt, dass die zweite Schalteinrichtung dann ausgewählt wird, wenn der zweite Gang-Steuerdruck eine erste Druckschwelle überschreitet. Der zweite Gang-Steuerdruck wirkt insbesondere gegen eine Feder, so dass sich die jeweilige Druckgrenze durch die Eigenschaften der Feder ergibt. Bei Überschreiten einer zweiten Druckschwelle durch den zweiten Gang-Steuerdruck ist eine Auswahl der ersten Schalteinrichtung und damit eine Einstellung eines Betätigungsdrucks an der ersten Schalteinrichtung mittels des ersten Gang-Steuerdrucks nicht mehr möglich. Die zweite Druckschwelle kann gleich groß oder kleiner als die erste Druckschwelle sein. Damit wird eine sichere Verriegelung der ersten Schalteinrichtung ermöglicht.

Der erste Gang-Steuerdruck wirkt insbesondere gegen eine Feder. Damit wirkt dem ersten Gang-Steuerdruck nicht nur der zweite Gang-Steuerdruck, sondern auch die Federkraft entgegen. Damit ist eine geringere Höhe des zweiten Gang-Steuerdrucks ausreichend, um eine Auswahl der ersten Schalteinrichtung zu verhindern.

In Ausgestaltung der Erfindung ist der erste Gangschieber des Gangbetätigungssystems so ausgeführt, dass eine erste Wirkfläche des ersten Gang-Steuerdrucks kleiner ist als eine zweite Wirkfläche des zweiten Gang-Steuerdrucks. Damit ist ebenfalls eine geringere Höhe des zweiten Gang-Steuerdrucks ausreichend, um eine Auswahl der ersten Schalteinrichtung zu verhindern.

Die genannte Feder und/oder das Flächenverhältnis der ersten und zweiten Wirkflächen sind insbesondere so ausgelegt, dass bei Einstellung des zur Auswahl der zweiten Schalteinrichtung notwendigen minimalen Drucks als zweiter Gang-Steuerdruck der maximal einstellbare erste Gang-Steuerdruck nicht ausreicht, um zusätzlich die erste Schalteinrichtung auszuwählen.

In Ausgestaltung der Erfindung weist das Gangbetätigungssystem eine Rastiervorrichtung auf, welche eine Stellung der Schalteinrichtungen bei nicht vorhandenem Betätigungsdruck arretiert. Damit ist zur Beibehaltung einer eingestellten Stellung der Schalteinrichtungen kein Betätigungsdruck notwendig. Damit werden zum einen unkontrollierbare Veränderungen der Stellungen der nicht ausgewählten Schalteinrichtungen verhindert und zum anderen muss zum Halten der Stellung der ausgewählten Schalteinrichtung kein Druck aufgebracht werden, was den Wirkungsgrad der Steuerungseinrichtung verschlechtern würde. Der jeweilige Gang-Steuerdruck der ausgewählten Schalteinrichtung bleibt aber unverändert, um so die beschriebene Verriegelung zu gewährleisten. Die Rastiervorrichtung kann beispielsweise direkt am Gangschieber oder auch an einer Schaltgabel angeordnet sein.

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind.

Dabei zeigen:
- Fig. 1: eine schematische Darstellung eines Doppelkupplungsgetriebes eines Kraftfahrzeugs,
- Fig. 2: einen Schaltplan einer als hydraulische Steuerung ausgeführten Steuerungseinrichtung eines Doppelkupplungsgetriebes,
- Fig. 3: eine Rastiervorrichtung einer Schalteinrichtung eine Doppelkupplungsgetriebes,
- Fig. 4: Kennlinien eines Versorgungsdruckschiebers der hydraulischen Steuerung und
- Fig. 5: Druckverläufe bei einer Funktionsüberprüfung eines Notschiebers der hydraulischen Steuerung.

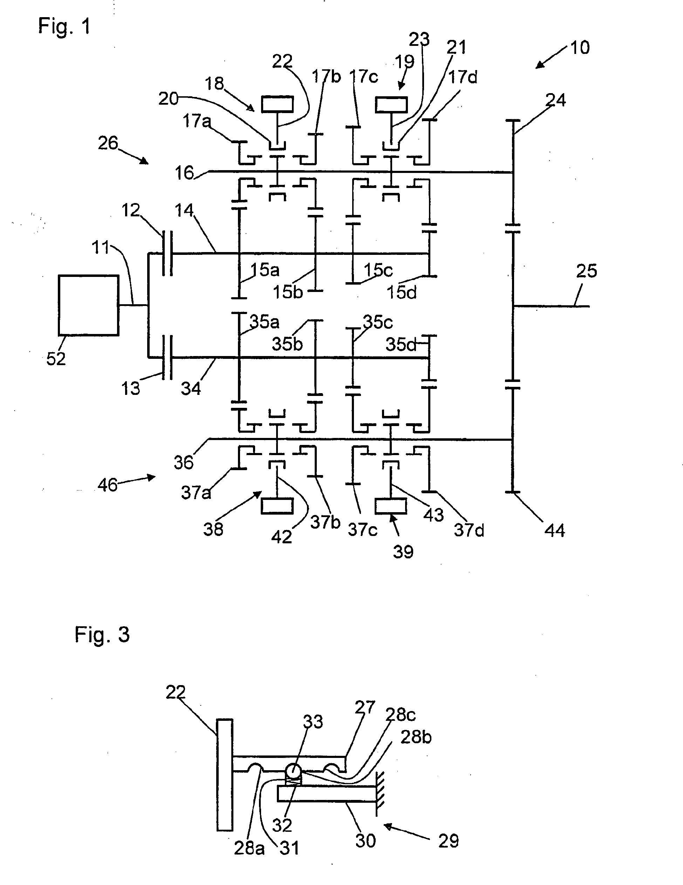

Gemäß Fig. 1 ist ein automatisiertes Getriebe in Form eines Doppelkupplungsgetriebes 10 für ein Kraftfahrzeug mit 7 Vorwärts- und einem Rückwärtsgang über eine Antriebswelle 11 mit einer Antriebsmaschine 52 beispielsweise in Form eines Verbrennungsmotors verbunden. Die Antriebswelle 11 steht mit einer ersten und einer zweiten Kupplung 12, 13 in Wirkverbindung. Die Kupplungen 12, 13 dienen als Anfahrkupplungen und sind insbesondere als nasse Reibungskupplungen ausgeführt, die hydraulisch betätigbar sind. Die Kupplung 12 steht außerdem mit einer ersten Getriebeeingangswelle 14 in Wirkverbindung, auf der vier Festräder 15a bis 15d angeordnet sind. Parallel zur ersten Getriebeeingangswelle 14 ist eine erste Vorgelegewelle 16 angeordnet, auf der vier Losräder 17a bis 17d drehbar gelagert sind, die jeweils mit den Festrädern 15a bis 15d der ersten Getriebeeingangswelle 14 kämmen. Die Losräder 17a, 17b können mittels einer ersten Schalteinrichtung 18 und die Losräder 17c, 17d mittels einer zweiten Schalteinrichtung 19 mit der Vorgelegewelle 16 drehfest gekoppelt werden. Die Schalteinrichtungen 18, 19 weisen dazu Schiebemuffen 20, 21 auf, durch deren Verschiebung in axialer Richtung der Vorgelegewelle 16 die Kopplungen zwischen den Losrädern 17a bis 17d mit der Vorgelegewelle 16 auf bekannte Weise hergestellt und getrennt werden können. Die Schiebemuffen 20, 21 können dazu von Schaltgabeln 22, 23 verschoben werden. Damit können vier Gänge des Doppelkupplungsgetriebes 10 gebildet bzw. ein- und ausgelegt werden. Über ein erstes Ausgangszahnrad 24 ist die erste Vorgelegewelle 16 mit einer Ausgangswelle 25 des Doppelkupplungsgetriebes 10 verbunden.

Die erste Getriebeeingangswelle 14, die Festräder 15a bis 15d, die Vorgelegewelle 16, die Losräder 17a bis 17d und das erste Ausgangszahnrad 24 bilden damit ein erstes Teilgetriebe 26 des Doppelkupplungsgetriebes 10.

Auf dieselbe Weise bilden eine zweite Getriebeeingangswelle 34, Festräder 35a bis 35d, eine Vorgelegewelle 36, Losräder 37a bis 37d und ein zweites Ausgangszahnrad 44 ein zweites Teilgetriebe 46 des Doppelkupplungsgetriebes 10, das mit der zweiten Kupplung 13 verbunden ist. Die damit gebildeten vier Gänge können über eine dritte und eine vierte Schalteinrichtung 38, 39 und zugehörige Schaltgabeln 42, 43 ein- und ausgelegt werden.

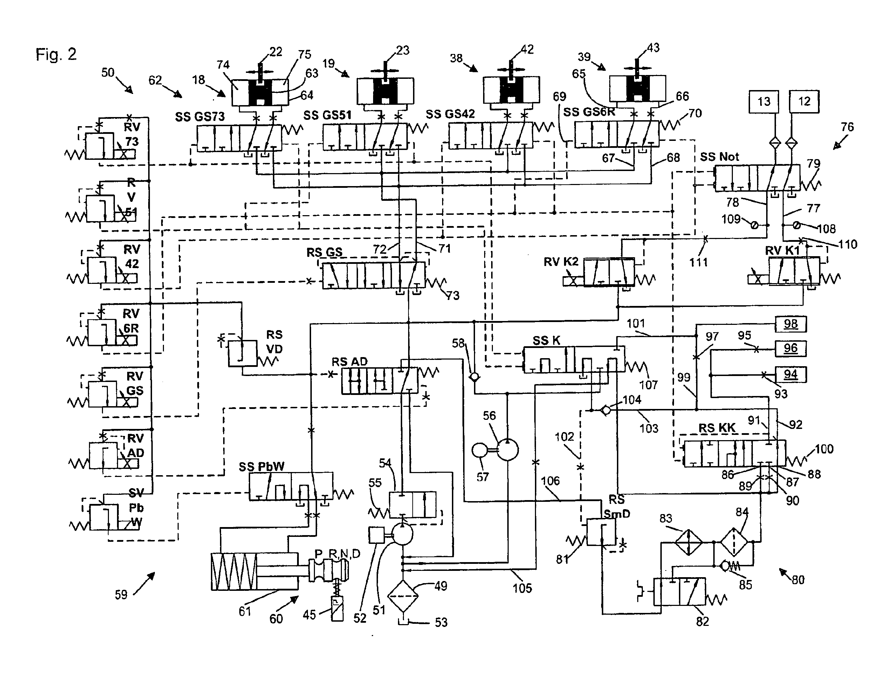

Die Kupplungen 12, 13 und die Schalteinrichtungen 18, 19, 38, 39 werden von einer als hydraulische Steuerung ausgeführten Steuerungseinrichtung angesteuert, deren Schaltplan in Fig. 2 dargestellt ist.

Gemäß Fig. 2 weist die hydraulische Steuerung 50 eine Hauptpumpe 51 auf, die von der Antriebsmaschine 52 des Kraftfahrzeugs angetrieben wird. Die Hauptpumpe 51 saugt dazu Öl über einen Saugfilter 49 aus einem Tank 53 an. Das Tank-Symbol wird an vielen Stellen des Schaltplans verwendet. Das Tank-Symbol ist dann immer so zu verstehen, dass die zugehörige Leitung zum Tank führt.

Ausgangsseitig der Hauptpumpe 51 ist ein Trennventil 54 angeordnet. Solange die Hauptpumpe 51 noch keinen ausreichenden Druck von ca. 1 - 1,5 bar aufgebaut hat, trennt das Trennventil 54 die Hauptpumpe 51 vom restlichen Hydrauliksystem. Dazu wird der Pumpendruck als Trenn-Steuerdruck genutzt, der gegen eine Feder 55 wirkt. Erst wenn der Pumpendruck groß genug ist, um die Federkraft zu überwinden, wird das Trennventil 54 aus der dargestellten Stellung verschoben und die Verbindung zwischen Hauptpumpe 51 und dem restlichen Hydrauliksystem hergestellt. Das Trennventil 54 dient zum einen dazu, einen Ölfluss in Richtung Hauptpumpe 51 zu verhindern und zum anderen dazu, ein notwendiges Anlaufverhalten der Hauptpumpe 51 zu gewährleisten.

Nach dem Trennventil 54 ist ein Arbeitsdruckschieber RS AD angeordnet, mittels welchem ein Arbeitsdruck im Hydrauliksystem eingestellt werden kann. Der Arbeitsdruckschieber RS AD ist in Form eines 4/3-Ventils, also eines Ventils mit 4 Anschlüssen und 3 Stellungen ausgeführt. Über einen ersten Anschluss ist der Arbeitsdruckschieber RS AD mit dem Trennventil 54 verbunden. Ein zweiter Anschluss ist mit der Saugseite der Hauptpumpe 51 verbunden. Über diesen Anschluss kann überschüssiges Öl direkt zur Hauptpumpe 51 zurückgeführt werden. Ein dritter Anschluss führt zu einem Hochdrucksystem, in dem der Arbeitsdruck herrscht, und ein vierter Anschluss zu einem Schmier-Kühlsystem 80.

Auf den Arbeitsdruckschieber RS AD wirkt zusammen mit einer Federkraft ein Arbeits-Steuerdruck gegen den zurückgeführten Arbeitsdruck. Der Arbeits-Steuerdruck wird von einem Regelmagnetventil RV AD eingestellt, das wie alle anderen Magnetventile von einer nicht dargestellten elektronischen Steuerung angesteuert wird. Durch Einstellung des Arbeits-Steuerdrucks kann ein gewünschter Arbeitsdruck zwischen ca. 3 und 25 bar eingestellt werden. Dazu nimmt der Arbeitsdruckschieber RS AD eine entsprechende Stellung ein.

In der dargestellten ersten Stellung des Arbeitsdruckschiebers RS AD fördert die Hauptpumpe 51 ausschließlich in das Hochdrucksystem, die beiden anderen Anschlüsse haben keine Verbindung. Diese Stellung nimmt der Arbeitsdruckschieber RS AD ein, wenn der angeforderte Arbeitsdruck größer ist als der zurückgeführte, tatsächliche Arbeitsdruck. Diese Stellung ergibt sich insbesondere dann, wenn die Hauptpumpe 51 keine ausreichend hohe Förderleistung bringt. Damit hat das Hochdrucksystem Vorrang vor dem Schmier-Kühlsystem 80. Ist der Arbeitsdruck ausreichend groß, so wird der Arbeitsdruckschieber RS AD in die zweite Stellung verschoben, in der die Hauptpumpe 51 sowohl in das Hochdrucksystem als auch in das Schmier-Kühlsystem 80 fördert. Ein Rückfluss zur Saugseite der Hauptpumpe 51 findet nicht statt. Ist der Arbeitsdruck zu groß, so wird der Arbeitsdruckschieber RS AD in die dritte Stellung verschoben, in der alle Anschlüsse miteinander verbunden sind und so zusätzlich auch ein Rückfluss zur Saugseite der Hauptpumpe 51 stattfinden kann. Durch schnelle Wechsel der verschiedenen Stellungen kann der angeforderte Arbeitsdruck eingeregelt werden.

Zusätzlich zur Hauptpumpe 51 weist die hydraulische Steuerung 50 eine Zusatzpumpe 56 auf, die von einem Elektromotor 57 angetrieben wird. Der Elektromotor 57 wird von der elektronischen Steuerung angesteuert. Der Betrieb der Zusatzpumpe 56 ist damit unabhängig vom Betriebszustand der Antriebsmaschine 52 des Kraftfahrzeugs. Die Zusatzpumpe 56 saugt ebenfalls über den Saugfilter 49 Öl an und fördert es über ein Rückschlagventil 58 in das Hochdrucksystem. Das Rückschlagventil 58 ist so angeordnet, dass ein Ölfluss in Richtung Zusatzpumpe 56 gesperrt ist. Über das Rückschlagventil 58 ist die Zusatzpumpe 56 mit dem dritten Anschluss des Arbeitsdruckschiebers RS AD und damit auch mit der Rückführung auf den Arbeitsdruckschieber RS AD verbunden. Das Trennventil 54 sorgt dafür, dass das von der Zusatzpumpe 56 geförderte Öl nicht in Richtung Hauptpumpe 51 abfließen kann. Außerdem kann die Zusatzpumpe 56 auch Öl in das Schmier-Kühlsystem 80 fördern.

Die Zusatzpumpe 56 kann also die Hauptpumpe 51 bei der Ölversorgung der hydraulischen Steuerung 50 unterstützen, damit kann die Hauptpumpe 51 kleiner ausgelegt werden. Die Zusatzpumpe 56 kann insbesondere auch dann die Ölversorgung sicherstellen, wenn die Antriebsmaschine 52 des Kraftfahrzeugs und damit auch die Hauptpumpe 51 stehen. Damit wird ein so genannter Start-Stopp-Betrieb des Kraftfahrzeugs ermöglicht.

Vom Arbeitsdruck wird über einen Versorgungsdruckschieber RS VD ein konstanter Versorgungsdruck von ca. 6,5 bar zur Versorgung der Magnetventile des Hydrauliksystems 50 abgeleitet und auf die Magnetventile geleitet.

Das Hydrauliksystem 50 weist ein Parksperren-Betätigungssystem 59 auf, mittels dem eine nur schematisch dargestellte Parksperre 60 ein- und ausgelegt werden kann. Mittels der Parksperre 60 kann auf bekannte Weise eine formschlüssige Verbindung zwischen einer Ausgangswelle und einem Gehäuse des Doppelkupplungsgetriebes hergestellt werden und so eine Bewegung des Kraftfahrzeugs verhindert werden. Das Parksperren-Betätigungssystem 59 weist einen Parksperrenschieber SS PbW in Form eines 5/2-Ventils auf. In der ersten, dargestellten Stellung ist eine erste Seite eines doppelt wirkenden Zylinders 61 der Parksperre 60 mit dem Arbeitsdruck verbunden. Damit wird bzw. ist die Parksperre 60 ausgelegt, was mit den zugehörigen Fahrstufen R, N, D angedeutet ist. In der zweiten Stellung des Parksperrenschiebers SS PbW ist die andere, zweite Seite des doppelt wirkenden Zylinders 61 mit dem Arbeitsdruck verbunden, so dass die Parksperre 60 eingelegt wird bzw. ist. Dies ist mit der zugehörigen Fahrstufe P angedeutet. Die Seite des doppelt wirkenden Zylinders 61, die nicht mit dem Arbeitsdruck verbunden ist, ist jeweils über den Parksperrenschieber SS PbW mit dem Tank verbunden. Zum Einstellen der beiden Stellungen des Parksperrenschiebers SS PbW wirkt ein Park-Steuerdruck auf den Parksperrenschieber SS PbW, der von einem Magnetschaltventil SV PbW eingestellt wird.

Die aktuelle Stellung der Parksperre kann mit einer Haltevorrichtung 45 arretiert werden. Die Haltevorrichtung 45 wird elektromagnetisch betätigt, wobei sie im nicht betätigten Zustand die aktuelle Stellung der Parksperre 60 arretiert. Die Parksperre 60 ist so ausgelegt, dass sie, sofern nicht die ausgelegte Stellung mittels der Haltevorrichtung 45 arretiert ist, in einem drucklosen Zustand des Parksperren-Betätigungssystem 59 eingelegt ist, also die Fahrstufe P aktiviert ist. Soll die Parksperre 60 ausgelegt werden, was beispielsweise durch den Fahrer mittels eines Wählhebels ausgelöst werden kann, so wird zunächst die Haltevorrichtung betätigt und so die Arretierung der Fahrstufe P aufgehoben. Anschließend kann die Parksperre durch das Parksperren-Betätigungssystem 59 ausgelegt werden. Nach dem Auslegen wird die Parksperre 60 in der ausgelegten Stellung mit der Haltevorrichtung 45 arretiert. Die Haltevorrichtung 45 wird von einer nicht dargestellten separaten Stromversorgung, beispielsweise einer Batterie mit elektrischer Energie versorgt, so dass eine Betätigung der Haltevorrichtung 45 auch bei nicht mehr funktionierender Bordspannungsversorgung noch betätigt und so ein Wechsel der Fahrstufe ermöglicht werden kann. Ist das Parksperren-Betätigungssystem 59 in diesem Moment drucklos, so wird wie oben beschrieben die Parksperre eingelegt und das Kraftfahrzeug kann nicht mehr bewegt werden. Damit kann die Parksperre 60 auch bei stehender Hauptpumpe 51 eingelegt werden.

Die Zusatzpumpe 56 und das Parksperren-Betätigungssystem 59 sind so ausgelegt, dass der von der Zusatzpumpe 56 geförderte Ölvolumenstrom ausreicht, um einen Druck im Hydrauliksystem 50 aufzubauen, der ausreicht, die Parksperre 60 auszulegen. Der dafür notwendige Druck liegt beispielsweise in einem Bereich zwischen 4 und 10 bar, wobei die Zusatzpumpe 56 beispielsweise einen Ölvolumenstrom zwischen von ca. 2 und 8 l/min liefern kann. Damit ist es möglich, die Parksperre 60 auch ohne Öl von der Hauptpumpe 51, beispielsweise bei einem Schaden an der Antriebsmaschine 52, zu betätigen und damit zu öffnen. Etwaige mechanische Lösungen, die in einem derartigen Fall ein Auslegen der Parksperre ermöglichen, sind damit nicht notwendig. Eine derartige Auslegung von Zusatzpumpe und Parksperren-Betätigungssystem ist unabhängig vom sonstigen Aufbau der hydraulischen Steuerung und kann auch anders aufgebauten hydraulischen Steuerungen und in Verbindung mit anderen Getriebesystemen, wie beispielsweise automatisierten Schaltgetrieben, Automatikgetrieben mit Planetensätzen oder stufenlosen Getrieben eingesetzt werden.

Das Hydrauliksystem 50 weist außerdem ein Gangbetätigungssystem 62 auf, mittels welchem die Schalteinrichtungen 18, 19, 38, 39 betätigt und so die verschiedenen Gänge des Doppelkupplungsgetriebes durch das beschriebene Verschieben der Schaltgabeln 22, 23, 42, 43 ein- und ausgelegt werden können. Die Schaltgabeln 22, 23, 42, 43 sind auch in der Fig. 2 dargestellt. Die Schalteinrichtungen 18, 19, 38, 39 sind nahezu identisch aufgebaut, so dass aus Gründen der Übersichtlichkeit stellvertretend für alle Schalteinrichtungen 18, 19, 38, 39 jeweils nur ein Bezugszeichen je Bauteil angegeben und in der Figur dargestellt ist.

Die Schaltgabeln 22, 23,42, 43 stehen jeweils in Wirkverbindung mit Kolben 63, die innerhalb von Zylindern 64 verschieblich angeordnet sind. Die Kolben 63 und die Zylinder 64 bilden so einen linken Druckraum 74 und einen rechten Druckraum 75. Der linke Druckraum 74 ist mit einer linken Betätigungsdruckleitung 65, der rechte Druckraum 75 ist mit einer rechten Betätigungsdruckleitung 66 verbunden. Durch Zuführung von Öl in den linken oder rechten Druckraum 74, 75 können die Kolben 63 auf beiden Seiten mit einem Betätigungsdruck beaufschlagt werden, so dass sie durch Bewegung in eine erste und eine zweite Richtung in zwei äußere und eine jeweils dargestellte, mittlere Stellung gestellt werden können. In einer äußeren Stellung ist die der jeweiligen Schalteinrichtung zugeordnete Schiebemuffe mittels der zugehörigen Schaltgabel in eine geschaltete Position gebracht, so dass eines von den beiden, der jeweiligen Schalteinrichtung zugeordneten Losrädern mit einer Vorgelegewelle gekoppelt ist und so ein Gang geschaltet ist. In der mittleren Stellung der Kolben 63 ist die zugehörige Schiebemuffe ebenfalls in einer mittleren, neutralen Stellung, so dass von dieser Schiebemuffe kein Gang geschaltet ist. Die erste Schalteinrichtung 18 kann so entweder einen 3. oder einen 7. Gang, die zweite Schalteinrichtung 19 einen 1. oder 5. Gang, die dritte Schalteinrichtung 38 einen 2. oder 4. Gang und die vierte Schalteinrichtung 39 einen Rückwärtsgang oder einen 6. Gang schalten. Entsprechend Fig. 1 sind damit die Gänge 3, 7, 1 und 5 dem ersten Teilgetriebe 26 und die Gänge 2, 4, 6 und der Rückwärtsgang dem zweiten Teilgetriebe 46 zugeordnet. Die Schalteinrichtungen 18, 19, 38, 39 verfügen über in der Fig. 2 nicht dargestellte Rastierungen, die dafür sorgen, dass eine eingestellte Stellung der Kolben 63 auch ohne weitere Druckbeaufschlagung gehalten wird. Eine mögliche Ausführung einer Rastierung ist in Fig. 3 dargestellt.

In Fig. 3 ist beispielhaft eine Rastiervorrichtung 29 an der Schaltgabel 22 der ersten Schalteinrichtung 18 dargestellt. An der Schaltgabel 22 ist ein erster Arm 27 so angeordnet, dass sich zwischen Schaltgabel 22 und erstem Arm 27 ein rechter Winkel ergibt. Der erste Arm 27 weist drei halbkreisförmige Ausnehmungen 28a, 28b, 28c auf. Parallel und den Ausnehmungen 28a, 28b, 28c gegenüber liegend ist ein gehäusefester zweiter Arm 30 angeordnet, auf dem eine Hülse 31 befestigt ist. In der Hülse 31 ist eine Feder 32 angeordnet, die eine Kugel 33 gegen den ersten Arm 27 drückt. Die Ausnehmungen 28a, 28b, 28c sind so auf dem ersten Arm 27 angeordnet, dass in den Fällen, in denen die Kolben 63 der Schalteinrichtungen und damit auch die Schaltgabel 22 in einer der beiden äußeren oder der mittleren Stellung befindet, die Kugel 33 in eine der Ausnehmungen 28a, 28b, 28c gedrückt wird. Damit ist in diesen Fällen die Schaltgabel 22 fixiert und die Stellung ist auch ohne einen Betätigungsdruck auf den Kolben 63 der Schalteinrichtungen stabil und damit arretiert.

Gemäß Fig. 2 sind den Schalteinrichtungen 18, 19, 38, 39 ein erster, ein zweiter, ein dritter und ein vierter Gangschieber SS GS73, SS GS51, SS GS42 und SS GS6R zugeordnet. Die Gangschieber SS GS73, SS GS51, SS GS42 und SS GS6R sind als 6/2-Ventile ausgeführt. In einer ersten, jeweils dargestellten Stellung der Gangschieber SS GS73, SS GS51, SS GS42 und SS GS6R sind die linke und rechte Betätigungsdruckleitung 65, 66 mit dem Tank verbunden. In einer zweiten Stellung der Gangschieber SS GS73, SS GS51, SS GS42 und SS GS6R sind die linke und rechte Betätigungsdruckleitung 65, 66 mit jeweils einem ersten und einem zweiten Versorgungseingang 67, 68 verbunden. Am ersten oder zweiten Versorgungseingang 67, 68 kann ein Öldruck anliegen, der über die Gangschieber SS GS73, SS GS51, SS GS42 und SS GS6R und die Betätigungsdruckleitungen 65, 66 auf die Kolben 63 wirken kann.

Die Einstellung der Gangschieber SS GS73, SS GS51, SS GS42 und SS GS6R erfolgt über jeweils ein Gang-Ventil in Form eines Regelmagnetventils RV73, RV51, RV42, RV6R, die jeweils einen Gang-Steuerdruck auf den jeweils zugeordneten Gangschieber SS GS73, SS GS51, SS GS42 und SS GS6R aufbringen. Die Gangschieber SS GS73, SS GS51, SS GS42 und SS GS6R weisen dazu jeweils einen Steuerdruckeingang 69 auf, der mit dem zugeordneten Regelmagnetventil RV73, RV51, RV42, RV6R verbunden ist. Dem jeweiligen Gang-Steuerdruck wirkt jeweils eine Feder 70 entgegen, die den Gangschieber SS GS73, SS GS51, SS GS42 und SS GS6R in die genannte erste, inaktive Stellung drücken möchte. Durch eine Einstellung eines ausreichend hohen Gang-Steuerdrucks, der bei den Gangschiebern SS GS73, SS GS51 ca 3 bar und den Gangschiebern SS GS42, SS GS6R ca. 5 bar beträgt, kann eine Schalteinrichtung ausgewählt und damit aktiviert werden und der zugehörige Kolben 63 über eine der beiden Betätigungsdruckleitungen 65, 66 und einen der beiden Versorgungseingänge 67, 68 mit Druck beaufschlagt werden.

Damit nicht beide Schalteinrichtungen 18, 19 bzw. 38, 39 eines Teilgetriebes 26, 46 gleichzeitig aktiviert werden und so möglicherweise gleichzeitig zwei Gänge in einem Teilgetriebe 26, 46 eingelegt werden, ist eine gegenseitige Verriegelung der der Schalteinrichtungen 18 und 19 bzw. 38 und 39 vorgesehen. Die Verriegelung ermöglicht es außerdem, dass die Gang-Steuerdrücke zusätzliche Funktionen erfüllen können.

Die Verriegelung der ersten Schalteinrichtungen 18 durch die zweite Schalteinrichtung 19 wird dadurch realisiert, dass der zweite Gang-Steuerdruck, der vom Regelmagnetventil RV 51 erzeugt wird und hauptsächlich der Aktivierung der zweiten Schalteinrichtung 19 dient, so auf den ersten Gangschieber SS GS73 geführt wird, dass er zusätzlich zur Federkraft dem ersten Gang-Steuerdruck, der vom Regelmagnetventil RV 73 erzeugt wird, entgegen wirkt. Der erste Gang-Steuerdruck wirkt dabei auf eine erste und der zweite Gang-Steuerdruck auf eine zweite Wirkfläche. Die zweite Wirkfläche des zweiten Gang-Steuerdrucks am ersten Gangschieber GS SS73 ist dabei größer als die erste Wirkfläche des ersten Gang-Steuerdrucks. Da außerdem noch die Federkraft gegen den ersten Gang-Steuerdruck wirkt, kann sobald der zweite Gang-Steuerdruck eine Druckschwelle erreicht hat, die erste Schalteinrichtung 18 durch den ersten Gang-Steuerdruck nicht mehr aktiviert werden. Die genannte Druckschwelle ist auf jeden Fall dann erreicht, wenn die zweite Schalteinrichtung 19 aktiviert ist.

Die Verriegelung der zweiten Schalteinrichtungen 19 durch die erste Schalteinrichtung 18 wird analog dadurch realisiert, dass der erste Gang-Steuerdruck, der vom Regelmagnetventil RV 73 erzeugt wird und hauptsächlich der Aktivierung der ersten Schalteinrichtung 18 dient, so auf den zweiten Gangschieber SS GS 51 geführt wird, dass er zusätzlich zur Federkraft dem zweiten Gang-Steuerdruck, der vom Regelmagnetventil RV 51 erzeugt wird, entgegen wirkt. Bezüglich der Wirkflächen der Gang-Steuerdrücke am Gangschieber GS SS51 gilt dasselbe wie beim Gangschieber GS SS73.

Damit verriegeln sich die erste und die zweite Schalteinrichtung 18, 19 gegenseitig.

Analog dazu ist auch eine Verriegelung der dritten und vierten Schalteinrichtung 38, 39 des zweiten Teilgetriebes 46 ausgeführt. Der einzige Unterschied besteht darin, dass bei den Gangschiebern SS GS42 und SS GS6R die genannten ersten und zweiten Wirkflächen der Gang-Steuerdrücke gleich groß sind. Eine sichere Verriegelung wird in diesen Fällen durch eine entsprechende Auslegung der Feder 70 erreicht. Die aufgebrachte Federkraft ist insbesondere höher als bei den Gangschiebern SS GS 73 und SS GS51.

Die Öldrücke an den ersten und zweiten Versorgungseingängen 67, 68 der Gangschieber SS GS73, SS GS51, SS GS42 und SS GS6R werden von einem Versorgungs-Ventil in Form eines Versorgungsdruckschiebers RS GS eingestellt. Der Versorgungsdruckschieber RS GS ist als ein 5/3-Ventil ausgeführt, der zwei Versorgungsausgänge 71, 72 aufweist, die jeweils mit den Versorgungseingängen 67, 68 der Gangschieber SS GS73, SS GS51, SS GS42 und SS GS6R verbunden sind. Neben zwei Abflüssen zum Tank weist der Versorgungsdruckschieber RS GS noch eine Verbindung zum Arbeitsdruckschieber RS AD auf, über die er mit Arbeitsdruck versorgt wird. In einer ersten, dargestellten Stellung des Versorgungsdruckschiebers RS GS wird der erste Versorgungseingang 67 der Gangschieber SS GS73, SS GS51, SS GS42 und SS GS6R mit Arbeitsdruck beaufschlagt. Bei entsprechender Stellung der Gangschieber SS GS73, SS GS51, SS GS42 und SS GS6R könnte damit ein Kolben 63 der Schalteinrichtungen 18, 19, 38, 39 bezüglich der Fig. 2 nach rechts verschoben werden. In einer zweiten, mittleren Stellung des Versorgungsdruckschiebers RS GS sind beide Versorgungseingänge 67, 68 der Gangschieber SS GS73, SS GS51, SS GS42 und SS GS6R mit dem Tank verbunden. Damit kann kein Betätigungsdruck auf den Kolben 63 wirken. In einer dritten Stellung des Versorgungsdruckschiebers RS GS wird der zweite Versorgungseingang 68 der Gangschieber SS GS73, SS GS51, SS GS42 und SS GS6R mit Arbeitsdruck beaufschlagt. Bei entsprechender Stellung der Gangschieber SS GS73, SS GS51, SS GS42 und SS GS6R könnte damit ein Kolben 63 der Schalteinrichtungen 18, 19, 38, 39 bezüglich der Fig. 2 nach links verschoben werden. Durch die mittlere Stellung des Versorgungsdruckschiebers RS GS ist gewährleistet, dass nie an beiden Versorgungseingängen 67, 68 der Gangschieber SS GS73, SS GS51, SS GS42 und SS GS6R gleichzeitig Druck anliegen kann. Der Versorgungsdruckschieber RS GS kann also den Arbeitsdruck als Versorgungsdruck wahlweise auf einen der beiden Versorgungsausgänge 71, 72 leiten.

Die Ansteuerung des Versorgungsdruckschiebers RS GS erfolgt durch ein Versorgungs-Ventil in Form eines Regelmagnetventils RV GS, das einen Versorgungs-Steuerdruck auf den Versorgungsdruckschieber RS GS aufbringt. Der Versorgungs-Steuerdruck wirkt gegen eine Feder 73, die so angeordnet ist, dass sie den Versorgungsdruckschieber RS GS in die genannte erste Stellung drückt. Außerdem werden die Drücke an den Versorgungsausgängen 71, 72 auf den Versorgungsdruckschieber RS GS zurückgeführt. Der Druck am Versorgungsausgang 71 wirkt dabei gleichsinnig zum Versorgungs-Steuerdruck und der Druck am Versorgungsausgang 72 gleichsinnig zur Feder 73. Damit ist der Versorgungsdruckschieber RS GS als ein Regelschieber ausgeführt, womit ein Solldruck an einem der Versorgungseingänge 71, 72, der über den Versorgungs-Steuerdruck vorgegeben wird, eingeregelt werden kann.

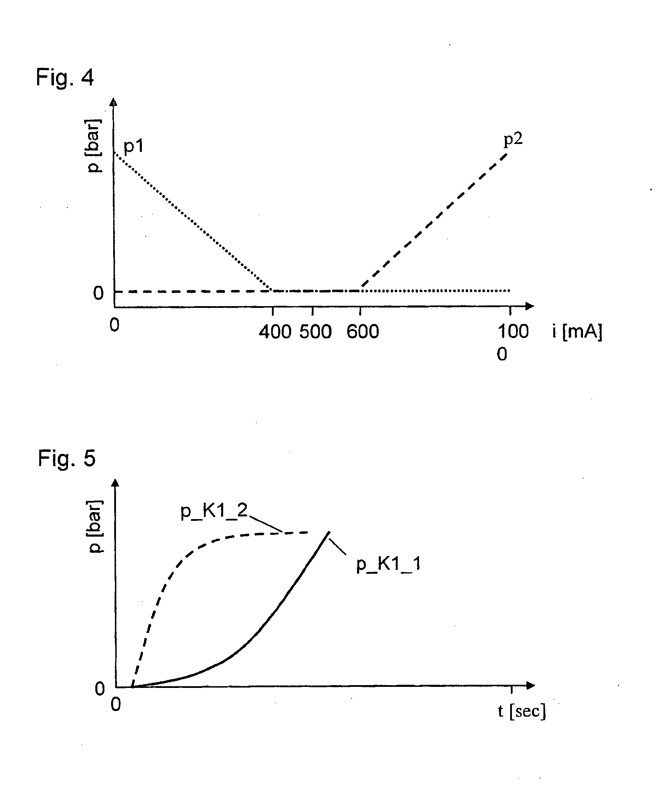

In Fig. 4 sind die sich ergebenden Kennlinien des Versorgungsdruckschiebers RS GS über einem Ansteuerstrom des Regelmagnetventils RV GS schematisch dargestellt.

Dabei wird davon ausgegangen, dass das Regelmagnetventil RV GS eine steigende Kennlinie aufweist und es sich bei der Strom-Druck-Kennlinie des Regelmagnetventils RV GS idealer weise um eine Ursprungsgerade handelt. In der Fig. 4 ist der Druck am ersten Versorgungsausgang 71 mit p1 (gepunktete Linie) und der Druck am zweiten Versorgungsausgang 72 mit p2 (gestrichelte Linie) bezeichnet. Bei einem Ansteuerstrom von 0 mA ergibt sich für den Druck am ersten Versorgungsausgang 71 ein Maximalwert von beispielsweise 20 bar. Vorausgesetzt, dass der Arbeitsdruck mindestens so hoch ist, wird dieser Druck vom Versorgungsdruckschieber RS GS durch eventuell notwendige Wechsel zwischen der genannten ersten und zweiten Stellung eingeregelt. Der Druck am zweiten Versorgungsausgang 72 ist dabei 0. Mit steigendem Ansteuerstrom fällt der eingeregelte Druck am ersten Versorgungsausgang 71 proportional ab, weshalb auch die Rückführung dieses Drucks gleichsinnig zum Versorgungs-Steuerdrucks notwendig ist. Der Druck am ersten Versorgungsausgang 71 erreicht bei einem Ansteuerstrom von ungefähr 400 mA den Wert 0 und bleibt auch bei weiter steigendem Ansteuerstrom konstant auf 0. Der Druck am zweiten Versorgungsausgang 72 bleibt bis zu einem Ansteuerstrom von ungefähr 600 mA konstant auf 0 und steigt dann mit steigendem Ansteuerstrom proportional an. Deshalb muss die Rückführung des Drucks am zweiten Versorgungsausgang 72 auch gegensinnig zum Versorgungs-Steuerdruck erfolgen. Der durch den Versorgungs-Steuerdruck vorgegebene Soll-Druck am zweiten Versorgungsausgang 72 wird vom Versorgungsdruckschieber RS GS durch eventuell notwendige Wechsel zwischen der genannten zweiten und dritten Stellung eingeregelt. Liegt der Ansteuerstrom zwischen ungefähr 400 und 600 mA, so befindet sich der Versorgungsdruckschieber RS GS in der genannten zweiten Stellung und es liegt an keinem der Versorgungsausgänge 71, 72 ein Druck an. Damit kann mittels des Versorgungsdruckschiebers RS GS entweder am ersten oder am zweiten Versorgungsausgang 71, 72 ein bestimmter Druck eingestellt werden.

Durch eine entsprechende Ansteuerung des Versorgungsdruckschiebers RS GS kann damit die Bewegungsrichtung eines ausgewählten Kolbens 63 einer Schalteinrichtung 18, 19, 38, 39 und damit die Schaltrichtung ausgewählt werden. Außerdem kann die Höhe des Betätigungsdrucks auf die Kolben 63 eingestellt bzw. eingeregelt werden.

Zur Durchführung einer Schaltung im Doppelkupplungsgetriebe 10 wird damit durch entsprechende Ansteuerung des Regelmagnetventils RV GS über den Versorgungsdruckschieber RS GS eine Schaltrichtung ausgewählt und ein gewünschter Versorgungsdruck für die der Gangschieber SS GS73, SS GS51, SS GS42 und SS GS6R eingeregelt. Durch entsprechende Ansteuerung der Regelmagnetventile RV73, RV51, RV42, RV6R wird außerdem über die Gangschieber SS GS73, SS GS51, SS GS42 und SS GS6R eine Schalteinrichtung 18, 19, 38, 39 ausgewählt, wobei es durch die Verriegelung unmöglich ist, beide Schalteinrichtungen 18,19 bzw. 38, 39 eines Teilgetriebes 26, 46 gleichzeitig auszuwählen. Durch eine entsprechende Einstellung des Gang-Steuerdrucks des ausgewählten Gangschiebers kann eine Durchflussmenge durch den Gangschieber in den ausgewählten Druckraum 74, 75 gesteuert werden. Damit ist es möglich, die Geschwindigkeit des Kolbens 63 bei der Schaltung zu variieren. Durch die Möglichkeit den Versorgungs- und damit den Betätigungsdruck einzustellen und außerdem die Durchflussmenge in den Druckraum 74, 75 zu steuern, kann der Schaltungsablauf im Doppelkupplungsgetriebe 10 genau vorgegeben werden.

Das Hydrauliksystem 50 verfügt zusätzlich über ein Kupplungssteuersystem 76 mittels welchem die Kupplungen 12, 13 betätigt, also mit Betätigungs- bzw. Kupplungsdruck beaufschlagt werden können. Damit können die Kupplungen 12, 13 geschlossen und geöffnet oder auch in einer definierten Schlupfstellung gehalten werden.

Das Kupplungssteuersystem 76 wird ebenfalls vom Arbeitsdruckschieber RS AD mit Arbeitsdruck versorgt. Der ersten Kupplung 12 ist ein erster Kupplungsschieber RV K1 und der zweiten Kupplung 13 ein zweiter Kupplungsschieber RV K2 zugeordnet, welche beide mit Arbeitsdruck versorgt werden. Die Kupplungsschieber RV K1 und RV K2 sind als direkt angesteuerte Regelschieber ausgeführt, die von der elektronischen Steuerung angesteuert werden. Die Kupplungsschieber RV K1 und RV K2 sind als 3/2-Ventile ausgeführt und können über jeweils eine erste und zweite Kupplungsleitung 77, 78 einen gewünschten Kupplungsdruck an der ersten und zweiten Kupplung 12, 13 einregeln. Dazu können die Kupplungsleitungen 77, 78 entweder mit dem Arbeitsdruck oder dem Tank verbunden werden.

Zwischen den Kupplungsschiebern RV K1 und RV K2 und den Kupplungen 12 und 13 ist ein Notschieber SS Not angeordnet, mittels welchem die Kupplungsleitungen 77, 78 in einer Notstellung des Notschiebers SS Not aufgetrennt und die Kupplungen 12 und 13 mit dem Tank verbunden werden können. In diesem Fall fällt der Kupplungsdruck an den Kupplungen 12 und 13 schlagartig auf Null ab und die Kupplungen 12 und 13 sind damit geöffnet. Damit kann die elektronische Steuerung beispielsweise bei einem erkannten Fehler im Doppelkupplungsgetriebe 10 eine Notöffnung auslösen und die Kupplungen 12 und 13 schlagartig öffnen. Der Notschieber SS Not ist dazu als 6/2-Ventil ausgeführt, auf das ein Not-Steuerdruck gegen eine Feder 79 wirkt. Ist die durch den Not-Steuerdruck wirkende Kraft kleiner als die Kraft der Feder 79, so wird der Notschieber SS Not in die dargestellte Stellung, die Normalstellung gedrückt, in der die Verbindung zwischen den Kupplungsschiebern RV K1, RV K2 und den Kupplungen 12, 13 hergestellt ist.

Als Not-Steuerdruck wirken gemeinsam der Gang-Steuerdruck der Gangschieber SS GS42 und SS GS6R, die primär zur Auswahl einer der Schalteinrichtungen 38, 39 des zweiten Teilgetriebes 46 dienen. Die Wirkfläche des Not-Steuerdrucks und die Feder 79 sind so ausgelegt, dass der maximale Gang-Steuerdruck einer der beiden Gangsschieber SS GS42 und SS GS6R alleine nicht ausreichend ist, um den Notschieber SS Not aus der dargestellten Stellung zu verschieben und eine Not-Öffnung auszulösen. Zur Auslösung einer Not-Öffnung müssen also die beiden zugehörigen Regelmagnetventile RV 42 und RV 6R angesteuert werden. Die Auslegung ist insbesondere so, dass beide Regelmagnetventile RV 42 und RV 6R nahezu ihren maximalen Druck liefern müssen.

Es wäre aber auch eine Auslegung möglich, bei der ein Gang-Steuerdruck alleine eine Not-Öffnung auslösen könnte. In diesem Fall müsste der erforderliche Druck für die Not-Öffnung deutlich oberhalb des für eine Aktivierung der entsprechenden Schalteinrichtung notwendigen Drucks liegen. Beispielsweise könnte für eine Aktivierung der Schalteinrichtung ein Druck von 3 bar ausreichend und für eine Not-Öffnung ein Druck von 5 bar notwendig sein. In diesem Fall könnte dann auch nur ein Gang-Steuerdruck als Not-Steuerdruck auf den Notschieber geführt werden.

Der Notschieber SS Not wird in einem Normalbetrieb des Doppelkupplungsgetriebes 10 nie geschaltet. Damit besteht die Gefahr, dass ein etwaiger Defekt am Notschieber SS Not erst dann festgestellt werden würde, wenn eine Not-Öffnung erfolgen soll. Um dies zu vermeiden, wird von der elektronischen Steuerung eine Funktionsüberprüfung des Notschiebers SS Not durchgeführt. Dazu wird in einer Neutralstellung des Doppelkupplungsgetriebes 10, also in einem Zustand, in dem kein Gang im Doppelkupplungsgetriebe 10 eingelegt ist, also beispielsweise in der Fahrstufe N oder P, ein Druckaufbau nach dem ersten und/oder zweiten Kupplungsschieber RV K1 und RV K2 bei den beiden Stellungen des Notschiebers SS Not verglichen. Dazu wird ein Kupplungsbetätigungsdruck sprungartig von Null auf einen festgelegten Wert erhöht. Die für den Vergleich notwendigen Duckverläufe können mittels Drucksensoren 108, 109 gemessen werden, die jeweils zwischen dem ersten und zweiten Kupplungsschieber RV K1, RV K2 und dem Notschieber SS Not angeordnet sind.

Befindet sich der Notschieber SS Not in der Notstellung, sind die Kupplungsleitungen 77, 78 durch den Notschieber SS Not abgeschlossen. In der Normalstellung dagegen sind die Kupplungsleitungen 77, 78 mit nicht dargestellten Druckräumen der Kupplungen 12, 13 verbunden. Damit kann sich Öl, das in der Normalstellung des Notschiebers SS Not von den Kupplungsschiebern RV K1 und RV K2 in die Kupplungsleitungen 77, 78 gefördert wird, auf ein deutlich größeres Volumen verteilen. Damit steigen die Drücke in den Kupplungsleitungen 77, 78 in der Normalstellung des Notschiebers SS Not langsamer bzw. flacher an als in der Notstellung. Damit der Druckaufbau bei den beiden Stellungen des Notschiebers SS Not auch deutlich unterscheidet, sollte insbesondere zwischen den Drucksensoren 108, 109 und den Kupplungen keine Blenden angeordnet sein. Eine an dieser Position angeordnete Blende würde bei Normalstellung des Notschiebers SS Not den Ölstrom in die Kupplungen 12, 13 behindern und so einen Staudruck erzeugen. Dieser Staudruck würde von den Drucksensoren 108, 109 gemessen werden. Damit wäre der Unterschied beim Druckaufbau bei den beiden Stellungen des SS Not nur gering und könnte unter Umständen nicht sicher erkannt werden. Aus diesem Grund sind Blenden 110 und 111 jeweils zwischen den Drucksensoren 108, 109 und den Kupplungsschiebern RV K1 und RV K2 angeordnet.

Die Blenden können auch zwischen dem Arbeitsdruckschieber RS AD und den Kupplungsschiebern RV K1 und RV K2 angeordnet sein. Es ist ebenso möglich, dass die Blenden so angeordnet sind, dass sie jeweils zwischen Abzweigungen der Rückführleitungen der Kupplungsschieber RV K1 und RV K2 und den Kupplungsschiebern RV K1 und RV K2 angeordnet sind.

Zur Funktionsüberprüfung des Notschiebers SS Not werden zunächst die Kupplungsschieber RV K1 und/oder RV K2 in der Normalstellung des Notschiebers SS Not angesteuert und anschließend mit einer identischen Ansteuerung in einer angesteuerten Notstellung des Notschiebers SS Not. Anschließend wird der Druckverlauf bzw. der Druckaufbau bei den beiden Ansteuerungen verglichen. Ist der Druckaufbau bei angesteuerter Notstellung des Notschiebers SS Not schneller bzw. steiler, so war die Einstellung der Notstellung erfolgreich und die Funktion des Notschiebers SS Not ist gewährleistet. Eine einfache Methode zur Bestimmung einer Kenngröße für die verschiedenen Gradienten ist es, die Zeitspanne bis zum Erreichen eines bestimmten Druckwerts zu messen. Ist der Unterschied zwischen der Zeitspanne bei angesteuerter Normalstellung um eine einstellbare Zeitdauer länger als die Zeitspanne bei angesteuerter Notstellung, so wird daraus geschlossen, dass der Notschieber SS Not die angesteuerte Notstellung auch tatsächlich eingenommen hat. Für die Funktionsprüfung ist es ausreichend, nur den Druckaufbau eines Drucks zu vergleichen und dementsprechend auch nur einen Kupplungsschieber RV K1 oder RV K2 anzusteuern.

In Fig. 5 sind beispielhaft zwei Druckverläufe des Drucks zwischen dem ersten Kupplungsschieber RV K1 und dem Notschieber SS Not über der Zeit dargestellt. Die durchgezogene Linie (p_K1_1) zeigt den Druckaufbau bei einer Normalstellung des Notschiebers SS Not, die gestrichelte Linie (p_K1_2) den Druckaufbau bei einer angesteuerten Notstellung. Wie deutlich zu sehen ist, steigt der Druck bei Normalstellung des Notschiebers SS Not deutlich langsamer und flacher an. Der Druckaufbau bei Normalstellung hat einen prinzipiell konkaven und der Druckaufbau in der Notstellung einen prinzipiell konvexen Verlauf. Damit kann die elektronische Steuerung erkennen, dass die angesteuerte Notstellung auch tatsächlich eingestellt wurde und somit der Notschieber funktioniert.

Das Schmier-Kühlsystem 80 des Hydrauliksystems 50 wird hauptsächlich vom Arbeitsdruckschieber RS AD über dessen vierten Anschluss über einen Zuführkanal 106 mit Öl versorgt. Dieses Öl wird auf einen Schmierdruckschieber RS SmD geleitet, der einen Schmierdruck im Schmier-Kühlsystem 80 einregelt. Die Höhe des Schmierdrucks ergibt sich zum einen durch die Auslegung einer Feder 81, die gegen den zurückgeführten Schmierdruck wirkt und zum anderen in Abhängigkeit eines Schmier-Steuerdrucks, der ebenfalls gegen die Feder 81 wirkt. Die Feder 81 ist beispielsweise so ausgelegt, dass sich ohne zusätzlichen Schmier-Steuerdruck ein Schmierdruck von ca. 3,5 bar einstellt. Die Einstellung des Schmier-Steuerdrucks wird weiter unten beschrieben.

Vom Schmierdruckschieber RS SmD gelangt das Öl zu einem an sich bekannten Thermostatventil 82, mittels welchem das Öl in Abhängigkeit von einer Öltemperatur entweder über einen Ölkühler 83 oder direkt auf einen nach dem Ölkühler 83 angeordneten Ölfilter 84 geleitet wird. Zur schnelleren Aufheizung des Doppelkupplungsgetriebes 10 wird der Ölkühler 83 bei niedrigen Öltemperaturen umgangen. Parallel zum Ölfilter 84 ist ein Rückschlagventil 85 so angeordnet, dass ab einem bestimmten Staudruck vor dem Ölfilter 84 das Öl auch über das Rückschlagventil 85 am Ölkühler 84 vorbei strömen kann.

Nach dem Ölkühler 84 / Rückschlagventil 85 sind ein erster Kühlungsschieber SS K und ein zweiter Kühlungsschieber RS KK parallel angeordnet, so dass beide über Ölkühler 84 / Rückschlagventil 85 mit Öl versorgt werden. Der zweite Kühlungsschieber RS KK ist als 5/3-Ventil ausgeführt. Drei Eingänge 86, 87, 88 des Kühlungsschiebers RS KK sind mit dem Ölkühler 84 / Rückschlagventil 85 verbunden, wobei der erste Eingang 86 über eine erste Blende 89, der zweite Eingang 87 über eine zweite Blende 90 und der dritte Eingang 88 direkt, also ohne Zwischenschaltung einer Blende mit Öl versorgt wird. Die erste Blende 89 hat dabei insbesondere einen größeren Durchmesser als die zweite Blende 90.

Ein erster Ausgang 91 des Kühlungsschiebers RS KK ist über eine dritte Blende 93 mit einem Kühlsystem 94 eines Radsatzes des Doppelkupplungsgetriebes 10 und über eine vierte Blende 95 mit einem Kühlsystem 96 der elektronischen Steuerung verbunden. Ein zweiter Ausgang des Kühlungsschiebers RS KK ist über einen ersten Kühlkanal 99, in dem eine fünfte Blende 97 angeordnet ist, mit einem Kühlsystem 98 der Kupplungen 12, 13 verbunden. Mit der Wahl der Durchmesser der genannten Blenden 89, 90, 93, 95 und 97 lässt sich die Aufteilung der Ölströme zu den Kühlsystemen beeinflussen und auslegen.

In einer ersten, dargestellten Stellung des Kühlungsschiebers RS KK ist nur der dritte Eingang 88 mit dem zweiten Ausgang 92 und damit mit dem Kühlsystem 98 der Kupplungen 12, 13 verbunden. Die anderen Ein- und Ausgänge haben keine Verbindung. Damit fließt in dieser ersten Stellung des Kühlungsschiebers RS KK kein Öl in die Kühlsysteme 94 und 96. In einer zweiten, mittleren Stellung des Kühlungsschiebers RS KK sind der erste und zweite Eingang 86, 87 gemeinsam mit dem ersten Ausgang 91 und damit mit den Kühlsystemen 94 und 96 verbunden. Außerdem ist wie in der ersten Stellung der dritte Eingang 88 mit dem zweiten Ausgang 92 verbunden. In einer dritten Stellung ist nur der zweite Eingang 87 mit dem ersten Ausgang 91 verbunden. In dieser Stellung fließt also über den Kühlungsschieber RS KK kein Öl zum Kühlsystem 98 der Kupplungen 12, 13.

Die Stellung des Kühlungsschiebers RS KK ergibt sich aus einer Kraft einer Feder 100 gegen die der zurückgeführte Druck am zweiten Ausgang 92 des Kühlungsschiebers RS KK und ein zweiter Kühl-Steuerdruck wirkt. Als zweiter Kühl-Steuerdruck wird der vierte Gang-Steuerdruck des Regelmagnetventils RV 6R genutzt, dessen Hauptfunktion es ist, die vierte Schalteinrichtung 39 zu aktivieren. Da zur Aktivierung der vierten Schalteinrichtung wie beschrieben ca. 5 bar notwendig sind, kann der Druckbereich darunter zur Ansteuerung des zweiten Kühlungsschieber RS KK genutzt werden. Bei kleinem zweiten Kühl-Steuerdruck und kleinem Druck am zweiten Ausgang 92 ist der Kühlungsschieber RS KK in der ersten Stellung. Durch einen hohen zweiten Kühl-Steuerdruck kann die dritte Stellung eingestellt werden. Durch die Rückführung des Drucks am zweiten Ausgang 92 kann ein durch den zweiten Kühl-Steuerdruck und die Feder 100 vorgegebener Druckwert am zweiten Ausgang 92 und damit im ersten Kühlkanal 99 zum Kühlsystem der Kupplungen 12, 13 eingeregelt werden.

Der erste Kühlungsschieber SS K ist als ein 6/2-Ventil ohne Rückführung ausgeführt. Er wird vom Ölkühler 84 / Rückschlagventil 85 mit einem Ölvolumenstrom versorgt. Die dafür zur Verfügung stehende Ölmenge hängt unter anderem von der Stellung des zweiten Kühlungsschiebers RS KK ab. Kann über den zweiten Kühlungsschieber RS KK viel Öl abfließen, ist der Ölvolumenstrom zum ersten Kühlungsschieber SS K kleiner als in dem Fall, in dem über den zweiten Kühlungsschieber RS KK wenig Öl abfließen kann. Die über den zweiten Kühlungsschieber RS KK abfließende Ölmenge ist von dessen Stellung abhängig. Damit ist der Ölvolumenstrom vom Ölkühler 84 / Rückschlagventil 85 zum ersten Kühlungsschieber SS K mittels des zweiten Kühlungsschiebers RS KK beeinflussbar.

In einer ersten dargestellten Stellung des ersten Kühlungsschiebers SS K wird das Öl, das vom Ölkühler 84 / Rückschlagventil 85 kommt, über einen Rückführkanal 105 zur Saugseite der Hauptpumpe 51 geleitet. Damit kann überschüssiges Öl aus dem Schmier-Kühlsystem 80 direkt wieder in den Hochdruckkreis gepumpt werden. Alle anderen Anschlüsse haben in dieser Stellung entweder keine Verbindung oder sind mit dem Tank verbunden. In einer zweiten Stellung des Kühlungsschiebers SS K wird das Öl, das vom Ölkühler 84 / Rückschlagventil 85 kommt, über einen zweiten Kühlkanal 101, der parallel zum ersten Kühlkanal 99 angeordnet ist, zum Kühlsystem 98 der Kupplungen 12, 13 geleitet. Die Verbindung zur Saugseite der Hauptpumpe 51 ist in diesem Fall unterbrochen. Außerdem wird über den ersten Kühlungsschieber SS K in dessen zweiter Stellung eine Verbindung zwischen der Zusatzpumpe 56 und dem Schmier-Kühlsystem 80 hergestellt. Zum einen wird ein etwaiger Druck der Zusatzpumpe 56 über einen Steuerkanal 102 als Schmier-Steuerdruck auf den Schmierdruckschieber RS SmD geleitet. Sofern die Zusatzpumpe 56 einen Öldruck aufbaut, führt dies zu einer Erhöhung des Schmierdrucks im Schmier-Kühlsystem 80 und damit auch zu einer Erhöhung der für die Kühlung und Schmierung zur Verfügung stehenden Ölmenge. Das von der Zusatzpumpe 56 geförderte Öl wird zusätzlich über einen Zusatzölkanal 103, der teilweise dem Steuerkanal 102 entspricht, über ein Rückschlagventil 104 in den ersten Kühlkanal 99 und damit zum Kühlsystem 98 der Kupplungen 12, 13 geleitet. Das Rückschlagventil 104 ist so angeordnet, dass Öl nur von der Zusatzpumpe 56 in Richtung erstem Kühlkanal 99 fließen kann. Damit wird die zur Kühlung der Kupplungen 12, 13 zur Verfügung stehende Ölmenge erhöht.

Auf den ersten Kühlungsschieber SS K wirkt ein erster Kühl-Steuerdruck, der sich aus dem ersten und zweiten Gang-Steuerdruck der Regelmagnetventile RV 73 und RV 51 zusammensetzt. Diese Gang-Steuerdrücke dienen hauptsächlich zur Auswahl der ersten und zweiten Schalteinrichtung 18, 19 des ersten Teilgetriebes 26. Der erste Kühl-Steuerdruck wirkt gegen eine Feder 107, die so ausgelegt ist, dass ein Wechsel von der beschriebenen ersten in die zweite Stellung des ersten Kühlungsschiebers SS K bei einem Druck von ca. 5 bar erfolgt. Da für die Auswahl der ersten oder zweiten Schalteinrichtung 18, 19 wie oben beschrieben, ein deutlich kleinerer Druck ausreichend ist, kann die Auswahl einer Schalteinrichtung 18, 19 erfolgen, ohne dass dies einen Einfluss auf die Stellung des ersten Kühlungsschiebers SS K hat.

Falls der erste Kühlungsschieber SS K in die zweite Stellung gebracht werden soll, ohne dass eine der beiden Schalteinrichtungen 18 oder 19 ausgewählt werden sollen, so wird als erster und zweiter Gang-Steuerdruck von den Regelmagnetventilen RV 73 und RV 51 ein Druckwert von ca. 2,5 - 2,7 bar eingestellt. Diese Gang-Steuerdrücke sind jeweils zu klein um die erste oder zweite Schalteinrichtung 18 oder 19 auszuwählen, gemeinsam sind sie aber ausreichend, um den ersten Kühlungsschieber SS K in die zweite Stellung zu bringen.

Das Schmier-Kühlsystem 80 ermöglicht es damit, zwischen verschiedenen Kühlungsarten umzuschalten. In einer ersten Kühlungsart, bei der alle Kühlsysteme 94, 96, 98 mit einer Grundölmenge versorgt werden, ist der erste Kühlungsschieber SS K in der dargestellten ersten Stellung, so dass Öl vom Schmier-Kühlsystem 80 zur Saugseite der Hauptpumpe 51 zurückgeführt wird. Mittels des vierten Gang-Steuerdrucks, der als zweiter Kühl-Steuerdruck am zweiten Kühlungsschieber RS KK wirkt, wird ein gewünschter Druck im ersten Kühlkanal 99 zum Kühlsystem 98 der Kupplungen 12, 13 eingeregelt. Der zweite Kühlungsschieber RS KK befindet sich damit in einer Regelstellung zwischen der beschriebenen ersten und zweiten Stellung. Die erste und zweite Blende 89, 90 sind insbesondere so ausgeführt, dass die größte Menge zur Hauptpumpe 51 zurückfließt und die kleinste Menge in Richtung Kühlsysteme 94 und 96 fließt.

In einer zweiten Kühlart, in der das Kühlsystem 98 der Kupplungen 12, 13 nicht mit Öl versorgt wird, ist der erste Kühlungsschieber SS K ebenfalls in der dargestellten ersten Stellung. Der zweite Kühlungsschieber RS KK wird mittels des zweiten Kühl-Steuerdrucks in die beschriebene dritte Stellung gestellt, in der kein Öl in Richtung des Kühlsystems 98 der Kupplungen 12, 13 fließt.

In einer dritten Kühlart, in der eine erhöhte Ölmenge in das Kühlsystem 98 der Kupplungen 12, 13 geleitet wird, befindet sich der erste Kühlungsschieber SS K auf Grund eines entsprechenden ersten Kühl-Steuerdrucks in der beschriebenen zweiten Stellung. Damit wird kein Öl vom Schmier-Kühlsystem 80 zur Saugseite der Hauptpumpe 51 zurückgeführt. Das vom Ölfilter 84 / Rückschlagventil 85 in Richtung erstem Kühlungsschieber SS K fließende Öl wird über den zweiten Kühlkanal 101 zum Kühlsystem 98 der Kupplungen 12, 13 geleitet. Über den zweiten Kühl-Steuerdruck kann die Verteilung des über den zweiten Kühlungsschieber RS KK fließenden Öls eingestellt werden. Die Zusatzpumpe 56 ist dabei nicht in Betrieb.

Eine vierte Kühlart, in der eine sehr große Ölmenge in das Kühlsystem 98 der Kupplungen 12, 13 geleitet wird, unterscheidet sich von der dritten Kühlart nur dadurch, dass die Zusatzpumpe 56 zusätzlich Öl in das Schmier-Kühlsystem 80 fördert. Damit wird wie oben beschrieben durch den Schmierdruckschieber RS SmD der Schmierdruck erhöht, was zu einer Erhöhung der im Schmier-Kühlsystem 80 zur Verfügung stehenden Ölmenge führt. Außerdem fließt Öl von der Zusatzpumpe 56 über den Zusatzölkanal 103 zum Kühlsystem 98 der Kupplungen 12, 13. Damit wird eine maximale Ölmenge zum Kühlsystem 98 der Kupplungen 12, 13 gefördert.

Die Auswahl einer Kühlart durch die elektronische Steuerung erfolgt hauptsächlich durch den Kühlbedarf der Kupplungen 12, 13.

## Patentansprüche

1. Steuerungseinrichtung für ein automatisiertes Zahnräderwechselgetriebe insbesondere Doppelkupplungsgetriebe für ein Kraftfahrzeug mit einem ersten Teilgetriebe (26), in dem durch Koppeln von jeweils einem Losrad (17a, 17b, 17c, 17d) mit einer Welle (16) verschiedene Gänge eingelegt werden können, mit einem Gangbetätigungssystem (62), welches über
- eine erste fluidbetätigte Schalteinrichtung (18) des ersten Teilgetriebes (26), mittels welcher zumindest ein Losrad (17a) mit der Welle (16) gekoppelt und entkoppelt werden kann, wobei die Schalteinrichtung (18) einen Kolben (63) und einen Zylinder (64) aufweist, und der Kolben (63) zum Koppeln und Entkoppeln des Losrads (17a) in eine erste und eine zweite Richtung innerhalb des Zylinders (64) beweglich ist,
- einen ersten Gangschieber (SS GS73), welcher der ersten Schalteinrichtung (18) zugeordnet ist und mittels welchem ein Betätigungsdruck auf die erste Schalteinrichtung (18) aufbringbar ist und
- einen Versorgungsdruckschieber (RS GS), mittels welchem ein Versorgungsdruck auf den Gangschieber (SS GS73) leitbar ist,
verfügt,
wobei
- der erste Gangschieber (SS GS73) für die erste und zweite Bewegungsrichtung des Kolbens (63) der Schalteinrichtung (18) einen ersten und einen zweiten Versorgungseingang (67, 68) aufweist,
- mittels des ersten Gangschiebers (SS GS73) eine Verbindung der Versorgungseingänge (67, 68) mit der Schalteinrichtung (18) herstellbar und unterbrechbar ist,
- der Versorgungsdruckschieber (RS GS) einen ersten und einen zweiten Versorgungsausgang (71, 72) aufweist, welche jeweils mit dem ersten und zweiten Versorgungseingang (67, 68) des Gangschiebers (SS GS73) verbunden sind und
- der Versorgungsdruckschieber (RS GS) so ausgeführt ist, dass er einen Versorgungsdruck wahlweise auf einen der beiden Versorgungsausgänge (71, 72) leiten kann,
**dadurch gekennzeichnet, dass**
das Gangbetätigungssystem (62) eine zweite Schalteinrichtung (19) des ersten Teilgetriebes (26) und einen zugehörigen zweiten Gangschieber (SS GS51) aufweist und der zweite Gangschieber (SS GS51) über zwei Versorgungseingänge (67, 68) verfügt, welche mit den Versorgungsausgängen (71, 72) des Versorgungsschiebers (RS GS) verbunden sind und eine Verriegelungsvorrichtung vorgesehen ist, welche ein gleichzeitiges Auswählen von zwei Schalteinrichtungen (18, 19) des ersten Teilgetriebes (26) verhindert.

2. Steuerungseinrichtung nach Anspruch 1,
**dadurch gekennzeichnet, dass**
das Gangbetätigungssystem (62) eine dritte und vierte fluidbetätigte Schalteinrichtung (38, 39) und einen dritten und vierten Gangschieber (SS GS42, SS GS6R) zur Betätigung eines zweiten Teilgetriebes (46) aufweist und der dritte und vierte Gangschieber (SS GS42, SS GS6R) jeweils über zwei Versorgungseingänge (67, 68) verfügen, welche mit den Versorgungsausgängen (71, 72) des Versorgungsschiebers (RS GS) verbunden sind.

3. Steuerungseinrichtung nach Anspruch 2,
**gekennzeichnet durch**
der Versorgungsdruckschieber (RS GS) mit einem Arbeitsdruck versorgt wird und das Gangbetätigungssystem (62) ein dem Versorgungsdruckschieber (RS GS)) zugeordnetes ansteuerbares Versorgungs-Ventil (RV GS) aufweist, mittels welchem ein Versorgungs-Steuerdruck am Versorgungsdruckschieber (RS GS) einstellbar ist und **dadurch** in einem der Versorgungsausgänge (71, 72) ein vom Arbeitsdruck abgeleiteter Versorgungsdruck einstellbar ist.

4. Steuerungseinrichtung nach einem der Ansprüche 1 bis 3,
**dadurch gekennzeichnet, dass**
das Gangbetätigungssystem (62)
- ein erstes und ein zweites ansteuerbares Gang-Ventil (RV 73, RV 51), welche jeweils dem ersten und zweiten Gangschieber (SS GS73, SS GS51) zugeordnet sind und mittels welchen jeweils ein erster und ein zweiter Gang-Steuerdruck an dem jeweils zugeordneten Gangschieber (SS GS73, SS GS51) einstellbar ist, wobei
- am ersten Gangschieber (SS GS73) der zweite Gang-Steuerdruck des zweiten Gangschiebers (SS GS51) dem ersten Gang-Steuerdruck entgegen wirkt und so der erste Gangschieber (SS GS73) durch den zweiten Steuerdruck verriegelbar ist,
aufweist.

5. Steuerungseinrichtung nach Anspruch 4,
**dadurch gekennzeichnet, dass**
- das Gangbetätigungssystem (62) so ausgeführt ist, dass die zweite Schalteinrichtung (19) dann ausgewählt ist, wenn der zweite Gang-Steuerdruck eine erste Druckschwelle überschreitet und
- der erste Gangschieber (SS GS73) des Gangbetätigungssystems (62) so ausgeführt ist, dass bei Überschreiten einer zweiten Druckschwelle durch den zweiten Gang-Steuerdruck eine Einstellung eines Betätigungsdrucks an der ersten Schalteinrichtung (18) mittels des ersten Gang-Steuerdrucks nicht mehr möglich ist.

6. Steuerungseinrichtung nach Anspruch 5,
**dadurch gekennzeichnet, dass**
der erste Gangschieber (SS GS73) des Gangbetätigungssystems (62) eine Feder (70) aufweist, die zusätzlich zum zweiten Gang-Steuerdruck dem ersten Gang-Steuerdruck entgegen wirkt.

7. Steuerungseinrichtung nach Anspruch 5 oder 6,
**dadurch gekennzeichnet, dass**
der erste Gangschieber (SS GS73) des Gangbetätigungssystems (62) so ausgeführt ist, dass eine erste Wirkfläche des ersten Gang-Steuerdrucks kleiner ist als eine zweite Wirkfläche des zweiten Gang-Steuerdrucks.

8. Steuerungseinrichtung nach einem der Ansprüche 4 bis 7,
**dadurch gekennzeichnet, dass**
der zweite Gangschieber (SS GS51) des Gangbetätigungssystems (62) durch den ersten Gang-Steuerdruck verriegelbar ist.

9. Steuerungseinrichtung nach Anspruch 8,
**dadurch gekennzeichnet, dass**
das Gangbetätigungssystem (62)
- eine dritte und vierte fluidbetätigte Schalteinrichtung (38, 39),
- einen dritten und vierten Gangschieber (SS GS42, SS GS6R),
- ein drittes und viertes ansteuerbares Ventil (RV 42, RV 6R), mittels welchen ein dritter und vierter Gang Steuerdruck einstellbar ist,
zur Betätigung eines zweiten Teilgetriebes (46) aufweist und der dritte Gangschieber (SS GS42) durch den vierten Gang-Steuerdruck und der vierte Gangschieber (SS GS6R) durch den dritten Gang-Steuerdruck verriegelbar sind.

10. Steuerungseinrichtung nach einem der Ansprüche 4 bis 9,
**dadurch gekennzeichnet, dass**
das Gangbetätigungssystem (62) eine Rastiervorrichtung (29) aufweist, welche eine Stellung der Schalteinrichtungen (18, 19, 38, 29) bei nicht vorhandenem Betätigungsdruck arretiert.

## Claims

1. Control device for an automatic gear shift transmission, in particular a dual clutch transmission for a motor vehicle, having a first sub-transmission (26), in which different gears can be engaged by coupling a respective idler (17a, 17b, 17c, 17d) to a shaft (16), having a gear activating system (62), having
- a first fluid-activated shift means (18) of the first sub-transmission (26), by means of which at least one idler (17a) can be coupled to and de-coupled from the shaft (16), the shift means (18) having a piston (63) and a cylinder (64), and the piston (63) being movable in a first and a second direction within the cylinder (64) for coupling and decoupling the idler (17a),
- a first gear slide (SS GS73) which is assigned to the first shift means (18) and by means of which an activating pressure can be applied to the first shift means (18), and
- a supply pressure slide (RS GS), by means of which a supply pressure can be directed to the gear slide (SS GS73),
wherein
- the first gear slide (SS GS73) has a first and a second supply input (67, 68) for the first and second movement direction of the piston (63) of the shift means (18),
- by means of the first gear slide (SS GS73) a connection of the supply inputs (67, 68) to the shift means (18) can be produced and interrupted,
- the supply pressure slide (RS, GS) has a first and a second supply output (71, 72) which are respectively connected to the first and second supply input (67, 68) of the gear slide (SS GS73) and
- the supply pressure slide (RS GS) is designed so that it can direct a supply pressure optionally to one of the two supply outputs (71, 72), **characterised in that**
the gear activating system (62) has a second shift means (19) of the first sub-transmission (26) and an associated second gear slide (SS GS51), and the second gear slide (SS GS51) has two supply inputs (67, 68) which are connected to the supply outputs (71, 72) of the supply slide (RS GS) and a locking device is provided which prevents a simultaneous selection of two shift means (18, 19) of the first sub-transmission (26).

2. Control device according to claim 1,
**characterised in that**
the gear activating system (62) has a third and fourth fluid-activated shift means (38, 39) and a third and fourth gear slide (SS GS42, SS GS6R) to activate a second sub-transmission (46), and the third and fourth gear slides (SS GS42, SS GS6R) respectively have two supply inputs (67, 68) which are connected to the supply outputs (71, 72) of the supply slide (RS, GS).

3. Control device according to claim 2,
**characterised in that**
the supply pressure slide (RS GS) is supplied with an operating pressure and the gear activating system (62) has a controllable supply valve (RV GS) assigned to the supply pressure slide (RV GS), by means of which supply valve (RV GS) a supply control pressure can be adjusted on the supply pressure slide (RS GS) and a supply pressure derived from the operating pressure can thereby be adjusted in one of the supply outputs (71, 72).

4. Control device according to one of the claims 1 to 3,
**characterised in that**
the gear activating system (62) has
- a first and a second controllable gear valve (RV 73, RV 51) which are respectively assigned to the first and second gear slide (SS GS73, SS GS51) and by means of which a first and a second gear control pressure can be adjusted on the respectively assigned gear slide (SS GS73, SS GS 51), wherein
- the second gear control pressure of the second gear slide (SS GS51) counteracts the first gear control pressure on the first gear slide (SS GS73), and the first gear slide (SS GS73) can thus be locked through the second control pressure.

5. Control device according to claim 4,
**characterised in that**
- the gear activating system (62) is designed so that the second shift means (19) is selected when the second gear control pressure exceeds a first pressure threshold and
- the first gear slide (SS GS73) of the gear activating system (62) is designed so that, if a second pressure threshold is exceeded by the second gear control pressure, it is no longer possible to adjust an activating pressure on the first shift means (18) by means of the first gear control pressure.

6. Control device according to claim 5,
**characterised in that**
the first gear slide (SS GS73) of the gear activating system (62) has a spring (70) which, in addition to counteracting the second gear control pressure, counteracts the first gear control pressure.

7. Control device according to claim 5 or 6,
**characterised in that**
the first gear slide (SS GS73) of the gear activating system (62) is designed so that a first operating surface of the first gear control pressure is smaller than a second operating surface of the second gear control pressure.

8. Control device according to one of the claims 4 to 7,
**characterised in that**
the second gear slide (SS GS51) of the gear activating system (62) can be locked by the first gear control pressure.

9. Control device according to claim 8,
**characterised in that**
the gear activating system (62) has
- a third and fourth fluid-activated shift means (38, 39),
- a third and fourth gear slide (SS GS42, SS GS6R),
- a third and fourth controllable valve (RV 42, RV 6R), by means of which a third and fourth gear control pressure can be adjusted,
for activation of a second sub-transmission (46), and the third gear slide (SS GS42) can be locked by the fourth gear control pressure and the fourth gear slide (SS GS6R) by the third gear control pressure.

10. Control device according to one of the claims 4 to 9,
**characterised in that**
the gear activating system (62) has an engagement means (29) which locks a position of the shift means (18, 19, 38, 29) if there is no activating pressure.

## Revendications

1. Dispositif de commande destiné à une boîte de vitesses automatisée, en particulier une boîte de vitesses à double embrayage d'un véhicule automobile dotée d'une première demi-boîte (26), dans laquelle plusieurs vitesses peuvent être enclenchées par accouplement à chaque fois d'une roue folle (17a, 17b, 17c, 17d) et d'un arbre (16), d'un système d'actionnement de vitesses (62), qui dispose
- d'un premier dispositif de changement de vitesse (18) de la première demi-boîte (26) actionné par un fluide, au moyen de laquelle au moins une roue folle (17a) peut être couplée ou découplée à l'arbre (16), le dispositif de changement de vitesse (18) présente un piston (63) et un vérin (64), et le piston (63) peut se déplacer pour coupler ou découpler la roue folle (17a) dans une première et une seconde direction à l'intérieur du vérin (64),
- d'une première vanne de commande de vitesse (SS GS73) laquelle est associée au premier dispositif de changement de vitesse (18) et au moyen duquel une pression de commande peut être appliquée sur le premier dispositif de changement de vitesse (18),
- d'une vanne de pression d'alimentation (RS GS) au moyen de laquelle une pression d'alimentation peut être fournie à la vanne de commande de vitesse (SS GS73),
- la première vanne de commande de vitesse (SS GS73) pour la première et la seconde direction de mouvement du piston (63) du dispositif de changement de vitesse (18) présentant une première et une seconde entrée d'alimentation (67, 68),
- au moyen de la première vanne de commande de vitesse (SS GS73) une liaison des entrées d'alimentation (67,68, 68) avec le dispositif de changement de vitesse (18) peut être réalisée et peut être interrompue,
- la vanne de pression d'alimentation (RS GS) présentant une première et une seconde sortie d'alimentation (71, 72) qui sont à chaque fois reliées à la première et à la seconde entrée d'alimentation (67, 68) de la vanne de commande de vitesse (SS GS73) et
- la vanne de pression d'alimentation (RS GS) étant conçue de telle sorte qu'elle puisse conduire au choix à l'une des deux sorties d'alimentation (71, 72), **caractérisé en ce que** le système d'actionnement de vitesses (62) présente un second dispositif de changement de vitesse (19) de la première demi-boîte (26) et une seconde vanne de commande de vitesse associée (SS GS51) et la seconde vanne de commande de vitesse (SS GS51) dispose de deux entrées d'alimentation (67, 68) qui sont reliées aux sorties d'alimentation (71, 72) de la vanne d'alimentation (RS GS) et il est prévu un dispositif de verrouillage qui empêche la sélection simultanée de deux dispositifs de changement de vitesse (18, 19) de la première demi-boîte (26).

2. Dispositif de commande selon la revendication 1, **caractérisé en ce que** le système d'actionnement de vitesses (62) présente un troisième et un quatrième dispositif de changement de vitesse (38, 39) actionnées par un fluide et une troisième et quatrième vanne de commande de vitesse (SS GS42, SS GS6R) pour actionner une seconde demi-boîte (46) et la troisième et la quatrième vanne de commande de vitesse (SS GS42, SS GS6R) disposent à chaque fois de deux entrées d'alimentation (67, 68) qui sont reliées aux sorties d'alimentation (71, 72) de la vanne d'alimentation (RS GS).

3. Dispositif de commande selon la revendication 2, **caractérisé en ce que** la vanne de pression d'alimentation (RS GS) est alimentée en pression de travail et le système d'actionnement de vitesses (62) présente une vanne d'alimentation (RV GS) pilotable associée à la vanne de pression d'alimentation (RS GS), au moyen de laquelle une pression de commande d'alimentation peut être réglée sur la vanne de pression d'alimentation (RS GS) et **en ce qu'**une pression d'alimentation détournée d'une pression de travail peut être réglée dans l'une des sorties d'alimentation (71, 72).

4. Dispositif de commande selon l'une quelconque des revendications 1 à 3, **caractérisé en ce que** le dispositif d'actionnement de vitesses (62) présente
- une première et une seconde soupape de commande de rapport (RV 73, RV 51) pilotables, qui sont à chaque fois associées à la première et à la seconde vanne de commande de vitesse (SS GS73, SS GS51) et au moyen desquelles à chaque fois une première et une seconde pression de commande de rapport peut être réglée sur chaque vanne de commande de rapport associée (SS GS73, SS GS51),
- sur la première vanne de commande de vitesse (SS GS73) la seconde pression de commande de rapport de la seconde vanne de commande de rapport (SS GS51) agissant à l'encontre de la première pression de commande de rapport et ainsi la première vanne de commande de rapport (SS GS73) pouvant être verrouillée par la seconde pression de commande.

5. Dispositif de commande selon la revendication 4, **caractérisé en ce que**
- le système d'actionnement de vitesses (62) est conçu de telle sorte que le second dispositif de changement de vitesse (19) soit alors sélectionné lorsque la seconde pression de commande de vitesse dépasse un premier seuil de pression et
- la première vanne de commande de rapport (SS GS73) du système d'actionnement de vitesses (62) est conçu de telle sorte qu'en cas de dépassement d'un second seuil de pression par la seconde pression de commande de vitesse un réglage d'une pression d'actionnement n'est plus possible sur le premier dispositif de changement de vitesses (18) au moyen de la première pression de commande de vitesse.

6. Dispositif de commande selon la revendication 5, **caractérisé en ce que** la première vanne de commande de vitesse (SS GS73) du système d'actionnement de vitesses (62) présente un ressort (70) qui en plus de la seconde pression de commande de vitesse agit à l'encontre de la première pression de commande de vitesse.

7. Dispositif de commande selon la revendication 5 ou la revendication 6, **caractérisé en ce que** la première vanne de commande de vitesse (SS GS73) du système d'actionnement de vitesses (62) est conçue de telle sorte qu'une première surface active de la première pression de commande de vitesse soit inférieure à une seconde surface active de la seconde pression de commande de vitesse.

8. Dispositif de commande selon l'une quelconque des revendications 4 à 7, **caractérisé en ce que** la seconde vanne de commande de vitesse (SS GS51) du système d'actionnement de vitesses (62) peut être verrouillée par la première pression de commande de vitesse.

9. Dispositif de commande selon la revendication 8, **caractérisé en ce que** le système d'actionnement de vitesses (62) présente
- un troisième et quatrième dispositif de changement de vitesse (38, 39) actionnés par un fluide,
- une troisième et une quatrième vanne de commande de vitesse (SS GS42, SS GS6R),
- une troisième et quatrième vanne pilotable (RV 42, RV 6R) au moyen desquelles une troisième et quatrième pression de commande de vitesse peuvent être réglées pour actionner une seconde demi-boîte (46) et la troisième vanne de commande de vitesse (SS GS42) peut être verrouillée par la quatrième pression de commande de vitesse et la quatrième vanne de commande de vitesse (SS GS6R) peut être verrouillée par la troisième pression de commande de vitesse.

10. Dispositif de commande selon l'une quelconque des revendications 4 à 9, **caractérisé en ce que** le système d'actionnement de vitesses (62) présente un dispositif de verrouillage (29) qui bloque une position des dispositifs de changement de vitesse (18,19, 36, 29) lorsqu'il n'y a pas de pression d'actionnement.
